# EUROPÄISCHE PATENTSCHRIFT

(11) **EP 1 700 760 B1**
(45) Veröffentlichungstag und Bekanntmachung des Hinweises auf die Patenterteilung: **09.01.2008**
(21) Anmeldenummer: 06004343.7
(22) Anmeldetag: 03.03.2006
(51) Int. Cl.: B60R 25/00, B60R 25/04

(54) **Zündschlosssystem für ein Kraftfahrzeug**
Ignition lock system for an automobile
Système de serrure de démarrage pour véhicule automobile

(30) Priorität: 11.03.2005 DE 102005011782
(43) Veröffentlichungstag der Anmeldung: 13.09.2006
(73) Patentinhaber: Marquardt GmbH, 78604 Rietheim-Weilheim (DE)
(72) Erfinder: Buhl, Steffen, 72469 Meßstetten (DE); Schwarz, Thomas, 78628 Wurmlingen (DE); Meßmer, Dennis, 78467 Trossingen (DE); Frohne, Hans-Joachim, 38165 Lehre (DE); Borngräber, Ralf, Dr., 38165 Lehre (DE)
(74) Vertreter: Otten, Herbert

(56) Entgegenhaltungen:
- EP-A2- 1 279 576
- DE-A1- 10 353 195

## Beschreibung

Die Erfindung betrifft ein Zündschloßsystem nach dem Oberbegriff des Patentanspruchs 1.

In Kraftfahrzeugen befindet sich bei hohen Sicherheitsanforderungen ein elektronisches Zündschloß, das mittels eines elektronischen Schlüssels betätigbar ist. Das elektronische Zündschloß und der elektronische Schlüssel sind Bestandteile des dem Schutz gegen unbefugte Benutzung dienenden Zündschloßsystems.

Aus der DE 103 53 195 A1 ist ein Zündschloßsystem für ein Kraftfahrzeug bekannt, das ein elektronisches Zündschloß sowie einen elektronischen Schlüssel umfaßt. Das Zündschloß weist eine in einem Trägerelement befindliche Aufnahme für den Schlüssel auf Das Trägerelement ist in der Art eines Schiebers mittels des Schlüssels zwischen einer Ausgangsstellung und Bewegungsstellungen linear bewegbar, derart daß das Zündschloß durch eine einfache geradlinige Bewegung des Schlüssels, beispielsweise durch eine manuelle Steck- und/oder Druckbewegung des Schlüssels durch den Benutzer, zu bedienen ist. Zwei Bewegungsstellungen für das Trägerelement sind jeweils als Raststellungen ausgebildet, wobei die beiden Raststellungen durch das Zusammenwirken einer die Kontur eines zweifachen Schaltherzens aufweisenden Rastkurve mit einem in die Rastkurve eingreifenden, mit einer elastischen Kraft beaufschlagten Raststift erzeugt sind. Zwischen dem Schlüssel und dem Zündschloß ist ein elektronischer Code austauschbar, so daß nach positiver Auswertung des Codes wenigstens eine vom Zündschloß bewirkbare Funktion, wie das Einschalten von Verbrauchern im Kraftfahrzeug, das Starten des Kraftfahrzeugs o. dgl., in den Bewegungsstellungen freigegeben ist und/oder ausgelöst wird. Die Ausgestaltung der Rastkurven als zweifaches Schaltherz erscheint allerdings in gewissem Sinne aufwendig.

Der Erfindung liegt die Aufgabe zugrunde, das mittels einer linearen Drückbewegung vom Benutzer bedienbare, zwei als Raststellungen aufweisende Zündschloß einfacher auszugestalten.

Diese Aufgabe wird bei einem gattungsgemäßen Zündschloßsystem durch die kennzeichnenden Merkmale des Anspruchs 1 gelöst.

Beim erfindungsgemäßen Zündschloß ist die andere zweite Raststellung durch das Zusammenwirken des Raststiftes mit einem Rastmechanismus erzeugt, wobei der Rastmechanismus mit einer elastischen Kraft in Richtung auf die Kontur der Rastkurve beaufschlagt ist. Somit läßt sich durch die einfache Schaltherzkontur mit einem zusätzlichem Rastmechanismus der Schlüssel bei erster Betätigung in die Stellung "Zündung EIN" schieben und bleibt in dieser Stellung. Von dort läßt sich der Schlüssel wieder in die "Stellung AUS" ziehen oder bei einer weiteren Betätigung in die "Stellung Fahrt" schieben, in welcher Stellung der Schieber im Schaltherz rastet. Bei abermaliger Betätigung in der "Stellung Fahrt" gelangt der Schlüssel ohne in der Rastposition "Stellung EIN" zu verharren in die "Stellung AUS". Weitere Ausgestaltungen der Erfindung sind Gegenstand der Unteransprüche.

In einfacher Ausgestaltung kann die erste Raststellung aus einer Vertiefung in der Kontur des Schaltherzens bestehen. Diese Vertiefung, in der der Raststift festgehalten ist, liegt der Spitze des Schaltherzens in etwa gegenüber. Die zweite Raststellung befindet sich an einer Seitenwand der Kontur des Schaltherzens, und zwar dort in etwa mittig zwischen der Vertiefung und der Spitze des Schaltherzens.

In einer ersten Variante besteht der Rastmechanismus aus einer eingespannten Blattfeder in der Art eines Biegebalkens. Die Blattfeder wirkt aufgrund der Einspannung mit einer Kraft in Richtung auf die Seitenwand der Kontur des Schaltherzens. Weiterhin ist die Blattfeder in etwa parallel zur Seitenwand der Kontur des Schaltherzens angeordnet. Hierbei wirkt die Blattfeder zusätzlich in der Art einer Haptikfeder. Vorteilhafterweise wird bei dieser Variante ein Teil weniger als sonst für den Rastmechanismus benötigt, es ist eine leichte Montage ermöglicht sowie die Haptik ist über die Vorspannung und den Winkel der Haptikfeder leicht einstellbar. Aufgrund der Reibung des Paares Stahl/Stahl ist kaum Abrieb zu befürchten. Schließlich ist diese Variante auch weitgehend resistent gegen Verschmutzung. Allerdings ist eine kleine Öffnung im Zündschloß für die Verrastung der Haptikfeder notwendig, so daß eine Ablaßöffung für Kondenswasser vorgesehen werden sollte.

In einer zweiten Variante besteht der Rastmechanismus aus einem einarmigen, an einem Drehlager gelagerten Drehhebel. Der Drehhebel kann mit einer Schenkelfeder in Richtung auf die Seitenwand der Kontur des Schaltherzens belastet sein. Außerdem kann der Drehhebel mit einer Spitze in etwa senkrecht zur Seitenwand der Kontur des Schaltherzens stehen. Vorteilhafterweise ist bei dieser Variante die Haptik über den Winkel und die Schenkelfeder einstellbar. Allerdings sind hier zwei Teile für den Rastmechanismus notwendig.

In einer dritten Variante besteht der Rastmechanismus aus einem Schieber. Der Schieber kann mit einer Druckfeder in Richtung auf die Seitenwand der Kontur des Schaltherzens belastet sein. Schließlich kann der Schieber mit einer Spitze in etwa senkrecht zur Seitenwand der Kontur des Schaltherzens stehen. Vorteilhafterweise ist bei dieser Variante die Haptik über den Winkel und die Druckfeder einstellbar. Allerdings sind auch hier zwei Teile für den Rastmechanismus notwendig.

Die mit der Erfindung erzielten Vorteile bestehen insbesondere darin, daß mit Hilfe des Rastmechanismus die vom Bediener gefühlte Haptik einstellbar ist. Ein solches Zündschloß steigert folglich die Ergonomie für den Benutzer. Weiterhin ist vorteilhaft, daß bei einer solchen Art von Bedienung für das Zündschloß der Schlüssel während des Fahrbetriebs des Kraftfahrzeugs im wesentlichen vollständig im Zündschloß aufgenommen ist. Dadurch ist eine Verletzungsgefahr durch den Schlüssel für das Knie des Benutzers bei einem Unfall weitgehend verhindert.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein Zündschloßsystem für ein Kraftfahrzeug bestehend aus einem Zündschloß mit einem eingesteckten Schlüssel in perspektivischer Ansicht, wobei der Schlüssel in Ausgangsstellung befindlich ist,
- Fig. 2: einen Längsschnitt durch das Zündschloß aus Fig. 1,
- Fig. 3: eine perspektivische Ansicht des Inneren des Zündschlosses, wobei Teile des Zündschlosses weggelassen sind,
- Fig. 4: eine perspektivische Ansicht gemäß eines Ausschnittes aus Fig. 3, wobei weitere Teile des Zündschlosses weggelassen sind,
- Fig. 5: eine schematische Ansicht der Rastkurve im Zündschloß mit den Bewegungsstellungen,
- Fig. 6: schematisch den Rastmechanismus entsprechend einer ersten Ausführung,
- Fig. 7: schematisch den Rastmechanismus entsprechend einer zweiten Ausführung und
- Fig. 8: schematisch den Rastmechanismus entsprechend einer dritten Ausführung.

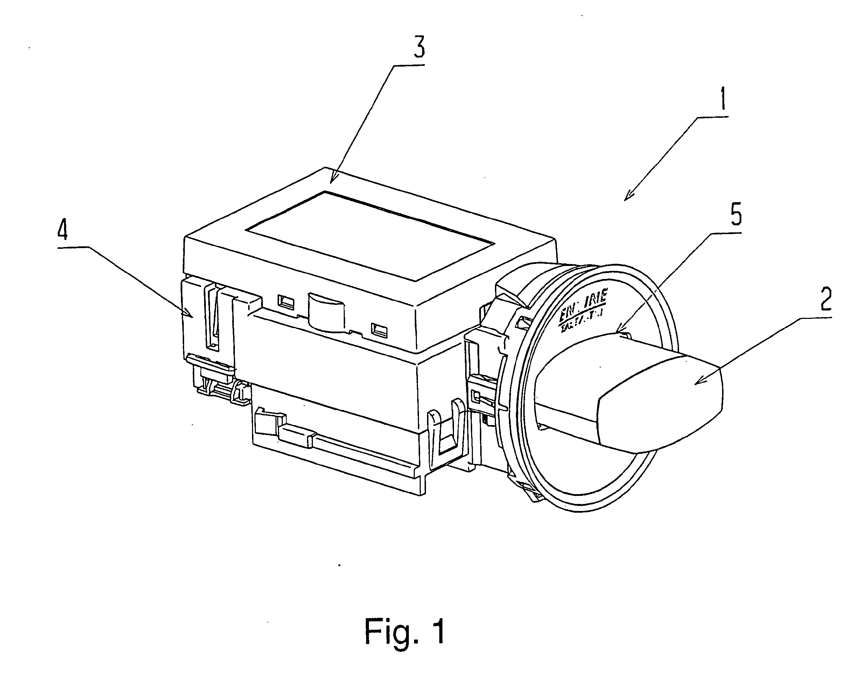

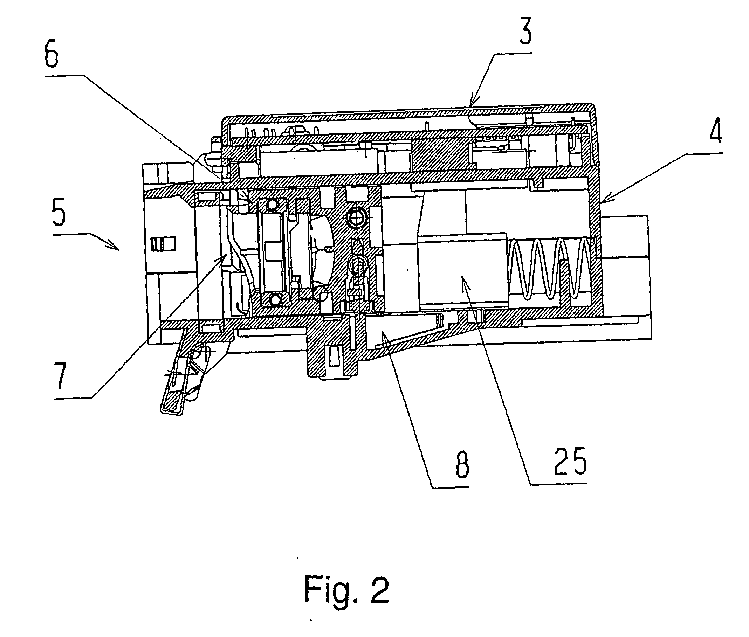

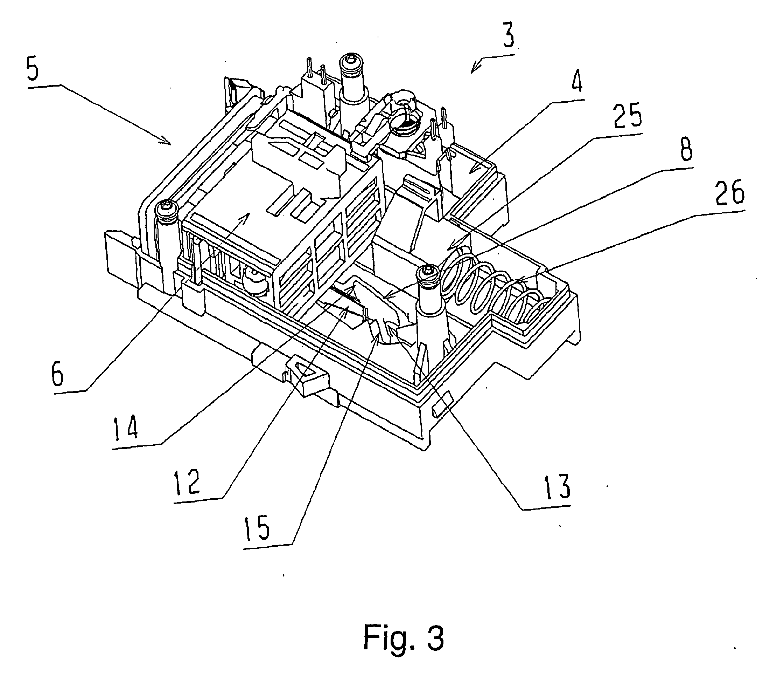

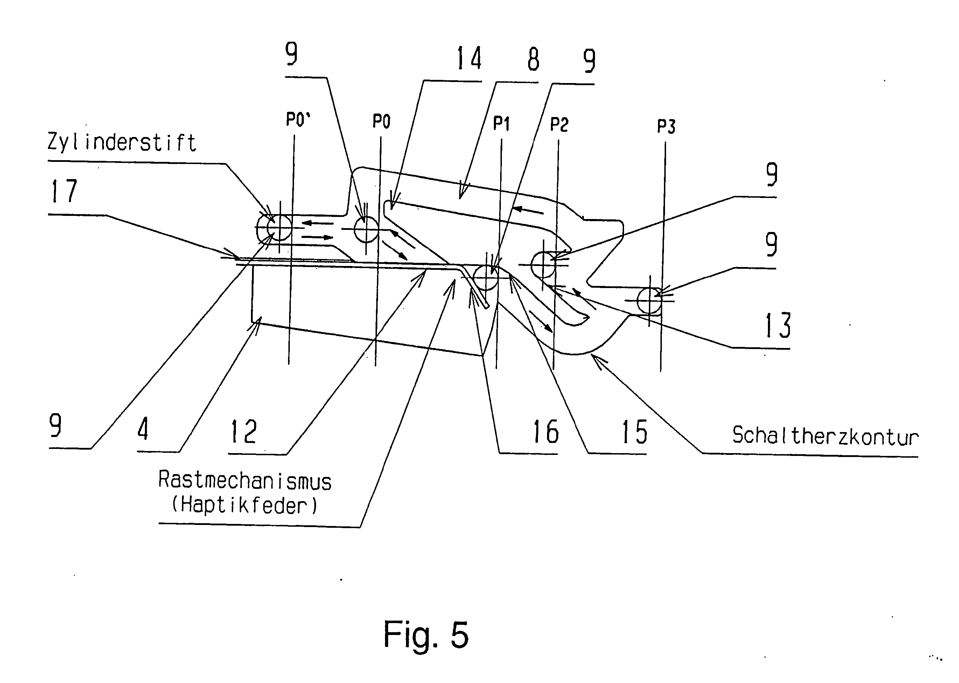

In Fig. 1 ist ein Zündschloßsystem 1 für ein Kraftfahrzeug zu sehen, das aus einem elektronischen Zündschloß 3 und einem elektronischen Schlüssel 2 besteht. Das beispielsweise in der Instrumententafel des Kraftfahrzeugs eingebaute Zündschloß 3 besitzt ein Gehäuse 4. In das Zündschloß 3 ist an einer in Fig. 2 sichtbaren Öffnung 5 im Gehäuse 4 der Schlüssel 2 einsteckbar. Wie näher aus Fig. 2 hervorgeht, weist das Zündschloß 3 eine in einem Trägerelement 6 befindliche Aufnahme 7 für den Schlüssel 2 auf. Das Trägerelement 6 ist mittels des Schlüssels 2 zwischen einer Ausgangsstellung P0' und hintereinander liegenden Bewegungsstellungen P0, P1, P2 sowie P3, die in Fig. 5 entsprechend bezeichnet sind, manuell bewegbar. Hierzu ist das Trägerelement 6 in der Art eines Schiebers linear beweglich gegen einen Anschlag 25 mit Druckfeder 26 ausgestaltet, wie auch der Fig. 3 entnommen werden kann.

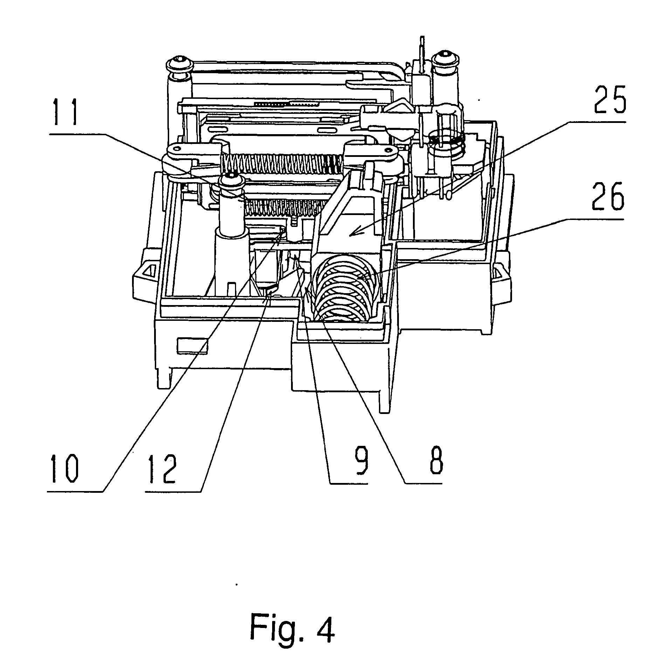

In der Ausgangsstellung P0' des Trägerelements 6 ist der Schlüssel 2 in die Aufnahme 7 einsteckbar sowie aus der Aufnahme 7 entnehmbar. Die Bewegungsstellung P1 sowie die Bewegungsstellung P2 für das Trägerelement 6 sind jeweils als Raststellungen ausgebildet. Die eine erste Raststellung P2 wird durch das Zusammenwirken einer die Kontur eines Schaltherzens aufweisenden Rastkurve 8 (siehe Fig. 3) mit einem Raststift 9 (siehe Fig. 4) festgelegt. Hierzu greift der Raststift 9 in die Rastkurve 8 ein, wie man anhand von Fig. 4 erkennen kann. Der Raststift 9 ist an einem Schiebeelement 10 angeordnet, das seinerseits zur Bewegungsrichtung des Trägerelements 6 querbeweglich am Trägerelement 6 gelagert ist, wie anhand von Fig. 3 und 4 zu erkennen ist. Weiter ist der Raststift 9 über das Schiebeelement 10 mit einer von einer Feder 11 erzeugten elastischen Kraft beaufschlagt. Die andere zweite Raststellung P1 ist durch das Zusammenwirken des Raststiftes 9 mit einem Rastmechanismus 12 erzeugt, wobei der Rastmechanismus 12 mit einer elastischen Kraft in Richtung auf die Kontur der Rastkurve 8 beaufschlagt ist.

Ist der Schlüssel 2 in die Aufnahme 7 eingeführt und wird dieser anschließend mitsamt dem Trägerelement 6 aufgrund manueller Einwirkung des Benutzers auf den Schlüssel 2 von der Ausgangsstellung P0' in eine der Bewegungsstellungen P0 bis P3 gebracht, so wird dabei zwischen dem Schlüssel 2 und dem Zündschloß 3 ein elektronischer Code, und zwar bevorzugt in einer bidirektionalen Kommunikation, ausgetauscht oder übertragen. Nach positiver Auswertung des zwischen dem Schlüssel 2 und dem Zündschloß 3 ausgetauschten elektronischen Codes, d.h. es handelt sich um den berechtigten Schlüssel 2, wird wenigstens eine vom Zündschloß 3 bewirkbare Funktion freigegeben und/oder ausgelöst. Bei dieser freigegebenen und/oder ausgelösten Funktion kann es sich um das Einschalten von Verbrauchern im Kraftfahrzeug, wie um das Radio, die Beleuchtung usw., um das Starten des Kraftfahrzeugs o. dgl. handeln. Der elektronische Code zur Freigabe und/oder Auslösung dieser Funktionen kann bei der Bewegung des Trägerelements 6 zwischen der Ausgangsstellung P0' und einer Bewegungsstellung P0 bis P3, in wenigstens einer der Bewegungsstellungen oder auch falls notwendig in anderen Stellungen, beispielsweise bereits in der Ausgangsstellung P0', zwischen dem Schlüssel 2 und dem Zündschloß 3 ausgetauscht werden. Die Auswertung des elektronischen Codes kann dabei im Zündschloß 3 selbst erfolgen oder falls gewünscht auch in einem separaten Steuergerät. Desweiteren ist der elektronische Code auch von einem sonstigen Identifikationsgeber, wie einer beim Benutzer befindlichen, separaten Chipkarte übertragbar, womit der Schlüssel 2 dann lediglich als Bedienelement im Zündschloß 3 für den Benutzer dient.

Der nähere Ablauf der Funktionsweise des Zündschloßsystems 1 ist nun wie folgt. In der Ausgangsstellung P0' des Trägerelements 6 wird der Schlüssel 2 in die Aufnahme 7 gesteckt und rastet in der Aufnahme 7 ein. Bei Bewegung des Schlüssels 2, indem der Benutzer auf den Schlüssel 2 drückend einwirkt, bis in die Bewegungsstellung P1 wird die sogenannte ,,Klemme 15" und/oder "Zündung Ein" aktiviert, in der das Zuschalten von Verbrauchern im Kraftfahrzeug ermöglicht ist. Bei der Bewegungsstellung P1 handelt es sich um eine rastende Bewegungsstellung für das Trägerelement 6 mitsamt dem Schlüssel 2. Bei nochmaligem Drücken des Schlüssels 2 durch den Benutzer wird das Trägerelement 6 bis in die Bewegungsstellung P3 bewegt, wo der Motor des Kraftfahrzeugs gestartet wird. Das Trägerelement 6 mitsamt dem Schlüssel 2 bleibt danach in der rastenden Bewegungsstellung P2 stehen. In der Bewegungsstellung P2 befindet sich das Kraftfahrzeug dann im Fahrbetrieb. Bei erneuter Betätigung des Schlüssels 2 durch den Benutzer wird der Motor des Kraftfahrzeugs gestoppt und das Trägerelement 6 mitsamt dem Schlüssel 2 bewegt sich bis in die Ausgangsstellung P0' zurück. Dort kann der Schlüssel 2 dann wiederum aus der Aufnahme 7 abgezogen werden. Schließlich kann, nachdem der Schlüssel 2 durch den Benutzer nur bis in die Bewegungsstellung P 1 gebracht ist, das Trägerelement 6 mitsamt dem Schlüssel 2 durch Ziehen am Schlüssel 2 wieder in die Ausgangsstellung P0' zurückgeführt werden, wobei dann kein Motorstart erfolgt. Die Bewegungsbahn für den Raststift 9 in der Rastkurve 8 bei diesem Ablauf ist in Fig. 5 eingezeichnet.

Wie anhand der Fig.5 zu erkennen ist, besteht die erste Raststellung P2 aus einer Vertiefung 13 in der Kontur des Schaltherzens 8. Die Vertiefung 13 liegt der Spitze 14 des Schaltherzens 8 in etwa gegenüber. Der Raststift 9 ist in der Raststellung P2 in dieser Vertiefung 13 festgehalten. Die zweite Raststellung P1 befindet sich an einer Seitenwand 15 der Kontur des Schaltherzens 8, und zwar dort in etwa mittig zwischen der Vertiefung 13 und der Spitze 14 des Schaltherzens 8.

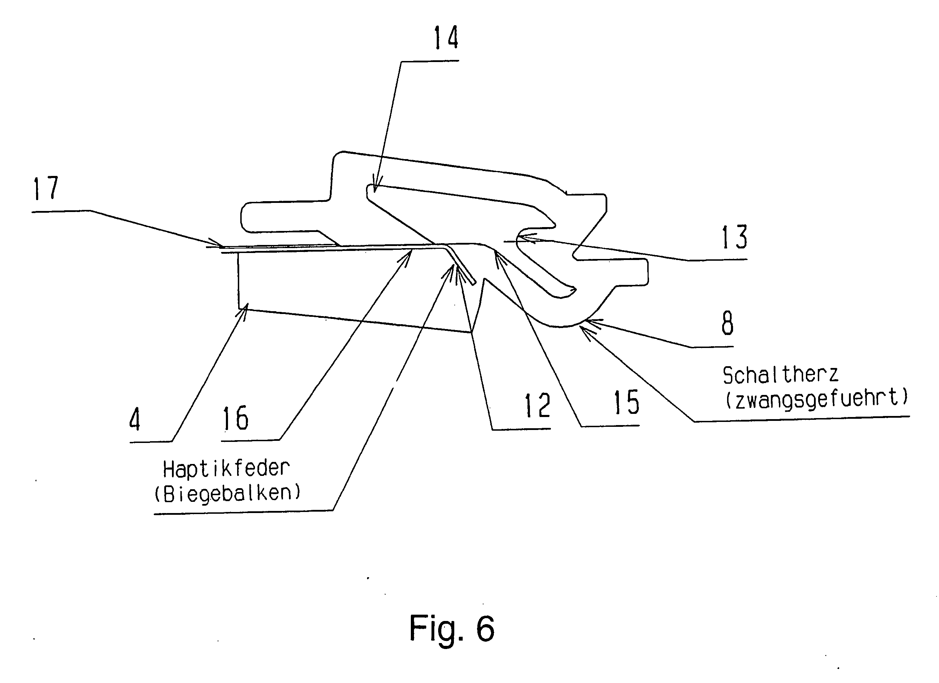

Die nähere Ausgestaltung des Rastmechanismus 12 entsprechend einem ersten Ausführungsbeispiel ist in Fig. 6 zu sehen. Der Rastmechanismus 12 besteht hier aus einer eingespannten Blattfeder 16 in der Art eines Biegebalkens. Die Blattfeder 16 wirkt nun nicht nur zur Erzeugung der Raststellung P 1 sondern wirkt gleichzeitig auch als Haptikfeder, um so dem Bediener eine gewisse haptische Rückmeldung bei Bewegung des Schlüssels 2 mitsamt dem Trägerelement 6 zu geben. Die Blattfeder 16 wirkt aufgrund der Einspannung 17 im Gehäuse 4 mit einer Kraft in Richtung auf die Seitenwand 15 der Kontur des Schaltherzens 8. Desweiteren ist die Blattfeder 16 in etwa parallel zur Seitenwand 15 der Kontur des Schaltherzens 8 angeordnet.

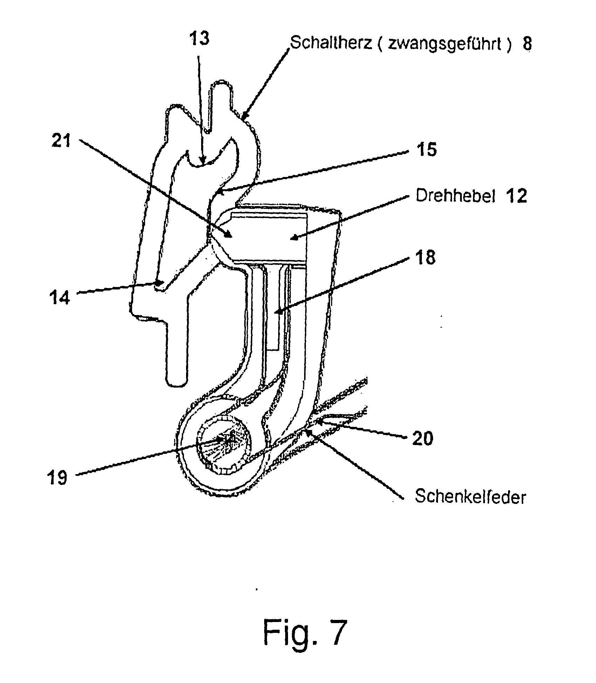

Der Rastmechanismus 12 gemäß einem weiteren Ausführungsbeispiel ist in Fig. 7 gezeigt. Hier besteht der Rastmechanismus 12 aus einem einarmigen, an einem Drehlager 19 gelagerten Drehhebel 18. Der Drehhebel 18 ist mit einer Schenkelfeder 20 in Richtung auf die Seitenwand 15 der Kontur des Schaltherzens 8 belastet. Weiterhin steht der Drehhebel 18 mit einer Spitze 21 in etwa senkrecht zur Seitenwand 15 der Kontur des Schaltherzens 8.

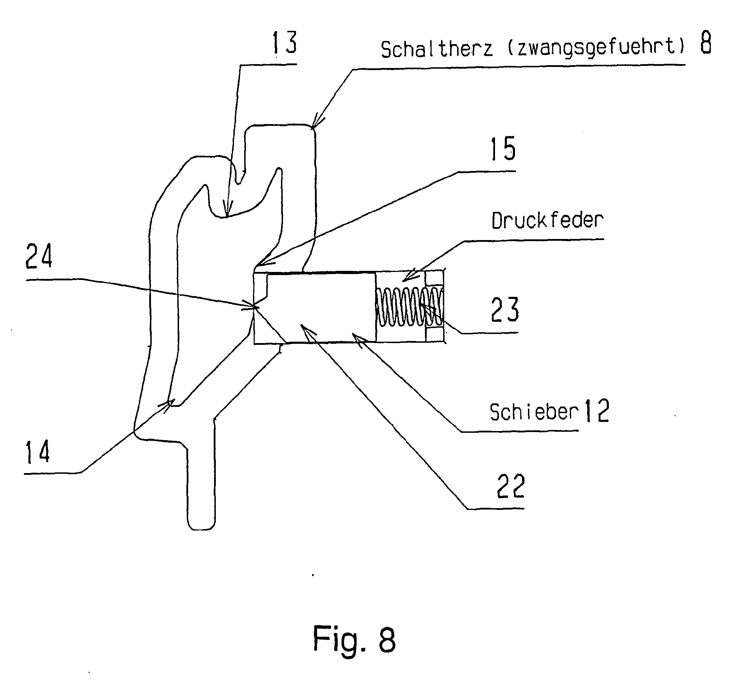

Schließlich ist der Rastmechanismus 12 gemäß noch einem weiteren Ausführungsbeispiel in Fig. 8 gezeigt. Hier besteht der Rastmechanismus 12 aus einem Schieber 22, der mit einer Druckfeder 23 in Richtung auf die Seitenwand 15 der Kontur des Schaltherzens 8 belastet ist. Der Schieber 22 steht mit einer Spitze 24 in etwa senkrecht zur Seitenwand 15 der Kontur des Schaltherzens 8.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die Erfindung nicht nur an Zündschloßsystemen für beliebige Fahrzeuge Verwendung finden, sondern auch an sonstigen Schlössern, beispielsweise solchen, die an Arbeitsmaschinen, Immobilien o. dgl. angeordnet sind, eingesetzt werden.

### Bezugszeichen-Liste:

- 1:: Zündschloßsystem
- 2:: Schlüssel
- 3:: Zündschloß
- 4:: Gehäuse
- 5:: Öffnung (im Gehäuse)
- 6:: Trägerelement
- 7:: Aufnahme
- 8:: Rastkurve / Schaltherz
- 9:: Raststift
- 10:: Schiebeelement
- 11:: Feder (für Schiebeelement)
- 12:: Rastmechanismus
- 13:: Vertiefung (in Schaltherz)
- 14:: Spitze (von Schaltherz)
- 15:: Seitenwand (von Schaltherz)
- 16:: Blattfeder (erste Ausführung von Rastmechanismus)
- 17:: Einspannung (von Blattfeder)
- 18:: Drehhebel (zweite Ausführung von Rastmechanismus)
- 19:: Drehlager (für Drehhebel)
- 20:: Schenkelfeder
- 21:: Spitze (von Drehhebel)
- 22:: Schieber (dritte Ausführung von Rastmechanismus)
- 23:: Druckfeder (für Schieber)
- 24:: Spitze (von Schieber)
- 25:: Anschlag (für Trägerelement)
- 26:: Druckfeder (am Anschlag)

## Patentansprüche

1. Zündschloßsystem, insbesondere in einem Kraftfahrzeug, mit einem elektronischen Zündschloß (3) sowie mit einem elektronischen Schlüssel (2), wobei das Zündschloß (3) eine in einem Trägerelement (6) befindliche Aufnahme (7) für den Schlüssel (2) aufweist, wobei das Trägerelement (6) in der Art eines Schiebers mittels des Schlüssels (2) zwischen einer Ausgangsstellung (P0') und Bewegungsstellungen (P0, P1, P2, P3) linear bewegbar ist, wobei zwei Bewegungsstellungen für das Trägerelement (6) jeweils als Raststellungen ausgebildet sind, wobei die eine erste Raststellung (P2) durch das Zusammenwirken einer, die Kontur eines Schaltherzens aufweisenden Rastkurve (8) mit einem in die Rastkurve (8) eingreifenden, mit einer elastischen Kraft beaufschlagten Raststift (9) erzeugt ist, wobei insbesondere zwischen dem Schlüssel (2) und dem Zündschloß (3) ein elektronischer Code austauschbar ist, und wobei nach positiver Auswertung des Codes wenigstens eine vom Zündschloß (3) bewirkbare Funktion, wie das Einschalten von Verbrauchern im Kraftfahrzeug, das Starten des Kraftfahrzeugs, freigegeben ist und/oder ausgelöst wird, **dadurch gekennzeichnet, daß** die andere zweite Raststellung (P1) durch das Zusammenwirken des Raststiftes (9) mit einem Rastmechanismus (12) erzeugt ist, wobei der Rastmechanismus (12) mit einer elastischen Kraft in Richtung auf die Kontur der Rastkurve (8) beaufschlagt ist.

2. Zündschloßsystem nach Anspruch 1, **dadurch gekennzeichnet, daß** die erste Raststellung (P2) aus einer Vertiefung (13) in der Kontur des Schaltherzens (8) besteht, die insbesondere der Spitze (14) des Schaltherzens (8) in etwa gegenüber liegt, wobei der Raststift (9) in dieser Vertiefung (13) festgehalten ist, und daß vorzugsweise die zweite Raststellung (P1) an einer Seitenwand (15) der Kontur des Schaltherzens (8), insbesondere dort in etwa mittig zwischen der Vertiefung (13) und der Spitze (14) des Schaltherzens (8), befindlich ist.

3. Zündschloßsystem nach Anspruch 1 oder 2, **dadurch gekennzeichnet, daß** der Rastmechanismus (12) aus einer eingespannten Blattfeder (16) in der Art eines Biegebalkens besteht, daß vorzugsweise die Blattfeder (16) aufgrund der Einspannung mit einer Kraft in Richtung auf die Seitenwand (15) der Kontur des Schaltherzens (8) wirkt, und daß weiter vorzugsweise die Blattfeder (16) in etwa parallel zur Seitenwand (15) der Kontur des Schaltherzens (8) angeordnet ist.

4. Zündschloßsystem nach Anspruch 1 oder 2, **dadurch gekennzeichnet, daß** der Rastmechanismus (12) aus einem einarmigen, an einem Drehlager (19) gelagerten Drehhebel (18) besteht, daß vorzugsweise der Drehhebel (18) mit einer Schenkelfeder (20) in Richtung auf die Seitenwand (15) der Kontur des Schaltherzens (8) belastet ist, und daß weiter vorzugsweise der Drehhebel (18) mit einer Spitze (21) in etwa senkrecht zur Seitenwand (15) der Kontur des Schaltherzens (8) steht.

5. Zündschloßsystem nach Anspruch 1 oder 2, **dadurch gekennzeichnet, daß** der Rastmechanismus (12) aus einem Schieber (22) besteht, daß vorzugsweise der Schieber (22) mit einer Druckfeder (23) in Richtung auf die Seitenwand (15) der Kontur des Schaltherzens (8) belastet ist, und daß weiter vorzugsweise der Schieber (22) mit einer Spitze (24) in etwa senkrecht zur Seitenwand (15) der Kontur des Schaltherzens (8) steht.

## Claims

1. Ignition lock system, in particular in a motor vehicle, with an electronic ignition lock (3) and an electronic key (2), wherein the ignition lock (3) comprises a slot (7) for the key (2) located in a support element (6), wherein the support element (6) can be moved linearly like a kind of slide by means of the key (2) between an initial position (PO') and movement positions (P0, P1, P2, P3), wherein two movement positions for the support element (6) are designed respectively as detent positions, wherein the first detent position (P2) is produced by the interaction of a detent curve (8) with the contour of a switch heart and a detent pin (9) engaging with the detent curve (8) and loaded by a resilient force, wherein in particular between the key (2) and the ignition lock (3) an electronic code can be exchanged, and wherein after a positive evaluation of the code at least one function performable by the ignition lock (3), such as switching on consumer units in the motor vehicle or starting the motor vehicle, is enabled and/or triggered, **characterised in that** the other second detent position (P1) is produced by the interaction of the detent pin (9) with a detent mechanism (12), wherein the detent mechanism (12) is loaded with a resilient force in the direction of the contour of the detent curve (8).

2. Ignition lock system according to claim 1, **characterised in that** the first detent position (P2) consists of a depression (13) in the contour of the switch heart (8), which lies in particular approximately opposite the tip (14) of the switch heart (8), whereby the detent pin (9) is secured in this depression (13), and **in that** preferably the second detent position (P1) is located on a side wall (15) of the contour of the switch heart (8), in particular approximately centrally between the depression (13) and the tip (14) of the switch heart (8).

3. Ignition lock system according to claim 1 or 2, **characterised in that** the detent mechanism (12) consists of a clamped leaf spring (16) in the form of a bending bar, **in that** preferably the leaf spring (16) due to the clamping acts with force in the direction of the side wall (15) of the contour of the switch heart (8), and **in that** also preferably the leaf spring (16) is arranged approximately parallel to the side wall (15) of the contour of the switch heart (8).

4. Ignition lock system according to claim 1 or 2, **characterised in that** the detent mechanism (12) consists of a single-arm rotary lever (18) mounted on a rotary bearing (19), **in that** preferably the rotary lever (18) is loaded by a torsion spring (20) in the direction of the side wall (15) of the contour of the switch heart (8), and **in that** also preferably the rotary lever (18) is located with a tip (21) approximately perpendicular to the side wall (15) of the contour of the switch heart (8).

5. Ignition lock system according to claim 1 or 2, **characterised in that** the detent mechanism (12) consists of a slide (22), **in that** preferably the slide (22) is loaded by a compression spring (23) in the direction of the side wall (15) of the contour of the switch heart (8), and **in that** also preferably the slide (22) is located with a tip (24) approximately perpendicular to the side wall (15) of the contour of the switch heart (8).

## Revendications

1. Système de serrure de démarrage notamment d'un véhicule automobile comportant une serrure de démarrage électronique (3) ainsi qu'une clé électronique (2), la serrure de démarrage (3) ayant un logement (7) pour la clé (2) dans un élément de support (6),
l'élément de support (6) étant mobile suivant un mouvement linéaire à la manière d'un coulisseau, à l'aide de la clé (2), entre une position de sortie (PO') et des positions de mouvement (P0, P1, P2, P3),
deux positions de mouvement étant chacune une position d'arrêt pour l'élément de support (6),
la première position d'arrêt (P2) étant obtenue par la coopération d'un chemin d'arrêt (8) ayant le contour d'un coeur de commutation avec une broche d'arrêt (9) sollicitée par une force élastique, pénétrant dans le chemin d'arrêt (8),
un code électronique pouvant être échangé, notamment entre la clé (2) et la serrure de démarrage (3), et
après exploitation positive du code, au moins une fonction assurée par la serrure de démarrage (3) telle que le branchement d'utilisateurs dans le véhicule, libère et/ou déclenche le démarrage du véhicule,
**caractérisé en ce que**
l'autre seconde position d'arrêt (P1) est obtenue par la coopération de la broche d'arrêt (9) et d'un mécanisme d'arrêt (12),
le mécanisme d'arrêt (12) étant sollicité par une force élastique en direction du contour du chemin d'arrêt (8).

2. Système de serrure de démarrage selon la revendication 1,
**caractérisé en ce que**
la première position d'arrêt (P2) est constituée par une cavité (13) dans le contour du coeur de commutation (8) qui se situe sensiblement en regard notamment de la pointe (14) du coeur de commutation (8), la broche d'arrêt (9) étant retenue dans cette cavité (13) et
de préférence la seconde position d'arrêt (P1) est prévue sur une paroi latérale (15) du contour du coeur de commutation (8), notamment sensiblement au milieu entre la cavité (13) et la pointe (14) du coeur de commutation (8).

3. Système de serrure de démarrage selon la revendication 1 ou 2,
**caractérisé en ce que**
le mécanisme d'arrêt (12) se compose d'un ressort-lame (16) encastré à la manière d'une poutre de flexion,
de préférence le ressort-lame (16) agit sous l'effet de l'encastrement avec une force en direction de la paroi latérale (15) du contour du coeur de commutation (8) et en outre de préférence le ressort-lame (16) est sensiblement parallèle à la paroi latérale (15) du contour du coeur de commutation (8).

4. Système de serrure de démarrage selon la revendication 1 ou 2,
**caractérisé en ce que**
le mécanisme d'arrêt (12) se compose d'un levier tournant (18) à un bras, logé dans un palier de rotation (19),
de préférence le levier tournant (18) est sollicité par un ressort à branche (20) en direction de la paroi latérale (15) du contour du coeur de commutation (8) et
en outre, de préférence le levier tournant (18) est disposé avec une pointe (21) sensiblement perpendiculairement à la paroi latérale (15) du contour du coeur de commutation (8).

5. Système de serrure de démarrage selon la revendication 1 ou 2,
**caractérisé en ce que**
le mécanisme d'arrêt (12) se compose d'un coulisseau (22),
le coulisseau (22) est de préférence sollicité par un ressort de compression (23) en direction de la paroi latérale (15) du contour du coeur de commutation (8) et
en outre, le coulisseau (22) est de préférence sensiblement perpendiculaire à la paroi latérale (15) du contour du coeur de commutation (8) par une pointe (24).
